# EUROPÄISCHE PATENTSCHRIFT

(11) **EP 0 944 326 B1**
(45) Veröffentlichungstag und Bekanntmachung des Hinweises auf die Patenterteilung: **25.07.2001**
(21) Anmeldenummer: 97910440.3
(22) Anmeldetag: 14.10.1997
(51) Int. Cl.: A22C 11/02

(54) **VERFAHREN UND VORRICHTUNG ZUM HERSTELLEN WURSTARTIGER PRODUKTE MIT SCHLAUCH- ODER BEUTELFÖRMIGER VERPACKUNGSHÜLLE**
METHOD AND DEVICE FOR PRODUCING SAUSAGE-TYPE PRODUCTS WITH A FLEXIBLE TUBULAR OR POUCHLIKE WRAPPER
PROCEDE ET DISPOSITIF POUR FABRIQUER DES PRODUITS DE TYPE SAUCISSE COMPORTANT UNE GAINE D'EMBALLAGE EN FORME DE TUBE OU DE POCHE

(30) Priorität: 12.11.1996 DE 19646721
(43) Veröffentlichungstag der Anmeldung: 29.09.1999
(73) Patentinhaber: Poly-clip System GmbH & Co. KG, 60489 Frankfurt am Main (DE)
(72) Erfinder: HANTEN, Jürgen, D-35519 Rockenberg (DE)
(74) Vertreter: Fischer, Ernst, Dr.
(86) Internationale Anmeldenummer: EP9705645
(87) Internationale Veröffentlichungsnummer: WO9820746

(56) Entgegenhaltungen:
- CH-A- 458 969
- GB-A- 2 050 801
- US-A- 4 558 488
- US-A- 4 766 645
- US-A- 4 837 897

## Beschreibung

Die Erfindung betrifft ein Verfahren zum Herstellen wurstartiger Produkte, bei dem Füllgut zum Befüllen einer schlauch- oder beutelförmigen Verpackungshülle in die einseitig verschlossene Verpackungshülle gepreßt und das Verpackungshüllenmaterial durch den Fülldruck von einem Vorrat abgezogen und dabei von einer Darmbremse abgebremst wird und die Verpackungshülle nach dem Befüllen auf das gewünschte Maß an einem zweiten Ende verschlossen wird. Außerdem betrifft die Erfindung eine Vorrichtung zum Herstellen wurstartiger Produkte.

Bekannte Vorrichtungen zum Befüllen schlauch- oder beutelförmiger Verpackungshüllen mit einem Füllgut weisen ein Füllrohr und eine Darmbremse auf. Die zu befüllende Verpackungshülle ist an einem Ende verschlossen und so auf die Außenfläche des Füllrohres aufgezogen, daß sich das verschlossene Ende der Verpakkungshülle vor einer Auslaßöffnung des Füllrohres befindet, während der Rest des Verpackungshüllenmaterials einen auf der Außenfläche des Füllrohres befindlichen Vorrat bildet. In der Nähe der Füllrohrauslaßöffnung wird die Verpackungshülle von der Darmbremse mit einstellbarer Kraft auf die Füllrohraußenfläche gedrückt.

Zum Befüllen der Verpackungshülle wird das Füllgut mit einem bestimmbaren Fülldruck durch das Füllrohr in die einseitig verschlossene Verpackungshülle gepreßt. Dabei wird weiteres Verpackungshüllenmaterial durch den Fülldruck von dem Vorrat abgezogen. Die zum Abziehen des Verpackungshüllenmaterials erforderliche Kraft kann mit Hilfe der Darmbremse eingestellt werden. Infolge der von dem Fülldruck zu überwindenden, einstellbaren Bremskraft der Darmbremse ergeben sich straffe, prall gefüllte Verpackungen. Wenn diese Verpackungen die gewünschte Menge Füllgut enthalten, werden sie an ihrem anderen Ende verschlossen und von dem übrigen Verpackungshüllenmaterial abgetrennt. Zum Verschließen wird das Verpackungshüllenmaterial üblicherweise zu einem Zopf eingeschnürt, auf den dann in einem gewissen Abstand voneinander zwei Clips gesetzt werden, die die Verpackungshülle geschlossen halten. Anschließend wird die Verpackungshülle zwischen den beiden Clips durchgetrennt, so daß einer der beiden Clips die bereits befüllte Verpackung an ihrem zweiten Ende geschlossen hält, während der andere Clip den vorgenannten, einseitigen Verschluß der noch zu befüllenden Verpackungshülle bildet.

Wichtig ist, daß die befüllte und verschlossene Verpackung ausreichend prall ist. Die Prallheit der Verpackung hängt von dem in der Verpackung herrschenden Innendruck ab. Dieser muß insbesondere bei Würsten so hoch sein, daß es zu keinem Geleeabsatz kommt: Bei Würsten wird die Verpackungshülle mit pastösem Wurstbrät befüllt, in dem sich unter anderem Fleischsaft befindet. Wenn der Innendruck in der Verpackungshülle nach dem Befüllen und Verschließen der Verpackungshülle zu gering ist, kann sich Fleischsaft sammeln und gelieren. So kommt es zu dem unerwünschten Geleeabsatz, der durch eine ausreichende Prallheit der Verpackung verhindert werden kann. Das Maß der Prallheit und entsprechend des Innendrucks in der Verpackungshülle, welches ausreicht um den unerwünschten Geleeabsatz zu verhindern, hängt dabei von der Art des Wurstbräts ab.

In der Praxis ergeben sich bei dem beschriebenen Befüllen von Verpackungshüllen einige Probleme: Beispielsweise kann die Prallheit der fertigen Verpackung infolge veränderter Füllgut-Konsistenz oder ungleichmäßiger Verpackungshüllenqualität so stark schwanken, daß Ausschuß produziert wird, weil die Verpackung nicht ausreichend prall oder zu prall ist. In einigen Fällen platzt die Verpackungshülle sogar. Die Menge des produzierten Ausschusses ist oft hoch, weil bei einer Produktionsmenge von 100 bis 150 Würsten pro Minute oft schon eine größere Menge von Ausschuß produziert worden ist, bis das Bedienpersonal der Füllmaschine den Fehler überhaupt erkennt.

Falls eine Verpackungshülle bereits beim Befüllen platzt, wird kein weiteres Hüllenmaterial aus dem Vorrat nachgezogen, weil der dazu erforderliche Fülldruck nicht mehr aufgebaut werden kann. Auf dieser Erkenntnis beruht die in der DE-PS 44 12 697 beschriebene Vorrichtung, bei der ein Rädchen an einem festen Ort auf der Verpackungshülle abrollt und sich dreht, wenn sich die Verpackungshülle bewegt. Aus der Drehung des Rädchens kann darauf geschlossen werden, daß tatsächlich Verpackungshüllenmaterial beim Befüllen aus dem Vorrat abgezogen wird. Dreht sich das Rädchen nicht, deutet dies auf eine beim Befüllen geplatzte Verpackungshülle hin. Andere Produktionsfehler, insbesondere starke Schwankungen der Prallheit, lassen sich mit der bekannten Vorrichtung nicht ermitteln.

Aus der US-A-4,766,645 ist ein Verfahren bekannt, bei dem der Außendurchmesser einer befüllten Verpackungshülle gemessen wird und der Meßwert zum Einstellen einer für das Abziehen der Verpackungshülle aus einem Vorrat benötigten Kraft herangezogen wird, um auf diese Weise den Außendurchmesser der Wurst auf das gewünschte Maß zu regeln.

Aus der GB-A-2 050 801 ist ein Verfahren bekannt, bei dem der Fülldruck, mit dem eine Verpackungshülle befüllt wird, gemessen wird, indem die Zugspannung gemessen wird, unter der die noch unbefüllte Verpackungshülle beim Abziehen von einem Vorrat steht. Da die Verpackungshülle stromabwärts des Meßortes noch durch einen Ring 19 geführt wird, dessen Innendurchmesser kleiner ist als der der befüllten Verpackungshülle, führt die Reibung zwischen der Verpackungshülle und dem Ring 19 dazu, daß die Spannungs der Verpackungshülle am Meßort nicht der Spannung der befüllten Verpackungshülle entspricht. Da die Verpackungshülle stromabwärts des Meßortes verschlossen wird, kann mit dem Verfahren die bereits befüllte Länge der Verpackungshülle während des Verschließens nicht überwacht werden.

Alle bekannten Verfahren lassen hinsichtlich der möglichst umfänglichen Überwachung der Produktion wurstartiger Produkte zu wünschen übrig, so daß Produktionsfehler, beispielsweise beim Verschließen der Verpackungshülle, unerkannt bleiben.

Der Erfindung liegt daher die Aufgabe zugrunde, anzugeben, wie sich der Ausschuß bei der Produktion von wurstartigen Produkten verringern läßt.

Die Lösung dieser Aufgabe besteht erfindungsgemäß in einem Verfahren der eingangs genannten Art, bei dem die Prallheit der Verpackungshülle sowohl während des Befüllens als auch während des Verschließens mittels eines Bensors erfaßt wird und das Befüllen oder das Verschließen sowchl bei Überschreiten eines oberen als auch bei Unterschreiten eines unteren Grenzwertes für die Prallheit unterbrochen wird.

Die Prallheit einer Wurst ergibt sich aus dem Innendruck des Füllgutes, der wiederum von dem Fülldruck und der Bremskraft der Darmbremse abhängt. Infolge des Innendrucks wird die Verbackungshülle je nach Material mehr oder weniger stare gedehnt, so daß die Prallheit einer Wurst auch an derer Durchmesser ablesbar ist. Bei elastischer Dehnung der Wursthülle herrscht in dieser eine rückstellende Spannkraft, die mit dem Innendruck der Wurst im Gleichgewicht statt. Die Spannung der Wursthülle setzt einer Verformung der Wurst einen meßberen, von der Prellheit der Wurst abhängenden Widerstand entgegen. Die Erfindung bercht auf der Erkenntnis der beschriebenen Zusammenhänge und macht sich die daraus resultierende Tatsache zunutze, daß sich die Prallheit einer Wurst beispielsweise über die zur Verformung der Wursthülle erforderliche Kraft oder bei definierter Krafteinwirkung über die resultierende Verformung sensorisch erfassen läßt. Die Dehnung der Wursthülte durch den in ihr herrsonenden Innendruck führt dazu, daß der Fülldurchmesser der prallen Verpackung nach dem Befülen größer ist als der Nenndurchmesser der ungedehnten Verpackungshülle. Der Durchmesserzuwachs infolge des Innendrucks hängt dabei insbesondere von der Elastizität der Wursthülle ab. in Kenntnis dieser Eigenschaft kann die Praliheit einer Wurst auch an ihrem Durchmesserzuwachs beim Befüllen abgelesen werden. Bei bekanntern Nenndurch messer der Verpackungshülle kann die Prallheit der Verpackung auch durch Messen des Fülldurchmessers der prell befüllten Verpackung ermitteit werden.

Ein Vorteil des Verfahrens besteht darin, daß die Prallheit der Verpackurgshülle auch während des Verschließens mittels eines Sensors erfaßt wird. Wie bereits beschrieben, wird die Verpackungshülle zum Verschließen zu einem Zopt eingeschnürt. Auch dieses Einschnüren der Verpackungshülle kann einen Einfluß auf den Innendruck der Wurst und damit auf deren Prallheit haben. Für eine genaue Überwachung der Wurstprallheit ist es daher unter Umständen wünschenswert, den Verschließvorgang in die Prallheitsüberwachung mit einzuschließen.

Ein Verfahren, bei dem das Befüllen oder Verschließen bei Überschreiten eines oberen oder Unterschreiten eines unteren Grenzwertes für die Prallheit unterbrochen wird, ermöglicht eine weitgehende Automatisierung der Wurstproduktion bei Vermeidung einer größeren Ausschußproduktion.

Weiter bevorzugt ist ein Verfahren, bei dem die Bremskraft der Darmbremse in Abhängigkeit von der ermittelten Prallheit reguliert wird. Voraussetzung für diese Ausgestaltung des Verfahrens ist es, daß die Prallheit der Würste kontinuierlich oder in diskreten Zeitabständen quantitativ erfaßt wird. Ein solcher quantitativer Meßwert kann zur Regulierung der Bremskraft der Darmbremse herangezogen werden, und zwar vorzugsweise in dem Sinne, daß die Bremskraft der Darmbremse bei größerer als gewünschter Prallheit der Verpackungshülle verringert und bei kleinerer Prallheit vergrößert wird. Dem liegt die Erkenntnis zugrunde, daß die Prallheit einer Wurst mit wachsender Bremskraft der Darmbremse zunimmt, weil zum Überwinden der höheren Bremskraft auch ein höherer Fülldruck erforderlich ist. Mit Hilfe des letztgenannten Verfahrens lassen sich Würste gleichmäßig hoher Qualität erzeugen, weil Abweichungen von der gewünschten Prallheit der Würste infolge schwankender Füllgutkonsistenz oder Verpackungshüllen-Qualität automatisch ausgeglichen werden.

Bei einer Variante des Verfahrens wird die Prallheit kontinuierlich erfaßt. Bei einem alternativen Verfahren wird die Prallheit in regelmäßigen Zeitabständen erfaßt.

Eine bevorzugte Variante des Verfahrens zeichnet sich dadurch aus, daß die Prallheit durch Abtasten des Außendurchmessers der Verpackungshülle erfaßt wird. Weiterhin wird ein Verfahren bevorzugt, bei dem zur Ermittlung der Prallheit die zur Verformung der gefüllten Verpackungshülle erforderliche Kraft erfaßt wird.

Weiterhin wird ein Verfahren bevorzugt, bei dem zur Ermittlung der Prallheit ein Stempel auf die befüllte Verpackungshülle gedrückt wird und dabei der vom Stempel zurückgelegte Weg oder die zum Bewegen des Stempels erforderliche Kraft oder beides aufgenommen wird. Aus dem Kraftverlauf als Funktion des Stempelweges kann auf die Prallheit der gefüllen Verpackung geschlossen werden. Es ist insbesondere möglich, den Kraftverlauf mit gespeicherten Soll-Kraftverläufen zu vergleichen und ggf. vorliegenden Abweichungen durch Verstellen der Bremskraft der Darmbremse gezielt entgegenzuwirken. Daher wird ein Verfahren besonders bevorzugt, bei dem die zur Ermittlung der Prallheit aufgenommenen Meßwerte mit gespeicherten Meßwerten verglichen werden.

Zur erfindungsgemäßen Lösung der Aufgabe wird weiterhin eine Vorrichtung der eingangs genannten Art vorgeschlagen, welche einen Sensor zum Ermitteln der Prallheit der Verpackungshülle sowie eine Steuereinheit aufweist, welche mit dem Sensor verbunden ist und von dem Sensor ermittelte Meßwerte mit gespeicherten Meßwerten vergleicht und die die Vorrichtung abschaltet, falls die Meßwerte einen oberen Grenzwert für die Prallheit überschreiten oder einen unteren Grenzwert unterschreiten. Die Vorteile einer solchen Vorrichtung ergeben sich schon daraus, daß mit ihr das erfindungsgemäße Verfahren durchgeführt werden kann.

Bei einer bevorzugten Ausführungsform einer Vorrichtung mit einer regulären Darmbremse weist die Vorrichtung eine Wirkverbindung von dem Sensor zur Darmbremse auf. Eine derartige Vorrichtung erfüllt die Voraussetzungen für die zuvor beschriebene Regelung der Prallheit und erlaubt damit die automatische Produktion von wurstartigen Produkten hoher Qualität.

Der Sensor der Vorrichtung weist vorzugsweise einen Stempel auf, welcher mit einer Tastfläche auf die Außenseite der befüllten Verpackungshülle preßbar ist, Mit Hilfe eines derartigen Stempels läßt sich der Außendurchmesser der befüllten Verpackungshülle leicht mechanisch abtasten.

Zum Bewegen des Stempels weist die Vorrichtung vorzugsweise eine Hubeinrichtung auf.

Eine bevorzugte Ausführungsform der Vorrichtung zeichnet sich dadurch aus, daß der Sensor einen Meßwertaufnehmer für den Verstellweg des Stempels oder die zur Bewegung des Stempels erforderliche Kraft oder für beides aufweist. Mit einer solchen Vorrichtung ist die Anpreßkraft, mit der der Stempel gegen die Verpakkungshülle gedrückt wird, meßbar, und es läßt sich die zum Verformen der gefüllten Verpackungshülle erforderliche Kraft ermitteln. Beispielsweise besteht die Möglichkeit, den Stempel so weit zu bewegen, daß die Verpackungshülle leicht eingedrückt wird, und dabei die erforderliche Kraft zu messen. Aus dem Kraftverlauf kann auf die Prallheit der Verpackung geschlossen werden. Der Kraftverlauf kann mit Meßwerten verglichen werden, die vorher an einer wunschgemäßen Verpackung ermittelt und abgespeichert wurden. Aus den Abweichungen des ermittelten Kraftverlaufs von dem gespeicherten Kraftverlauf kann dann auf die Produktqualität sowie auf eventuell vorliegende Produktionsfehler geschlossen werden.

Die Steuereinheit ist vorzugsweise mit dem Meßwertaufnehmer oder der Hubeinrichtung oder beiden verbunden. Die Steuereinrichtung kann einerseits die Meßwerte auswerten - also als Auswerteeinheit dienen - und andererseits anhand der Meßwerte aus dem Meßwertaufnehmer die Hubeinrichtung so ansteuern, daß der Stempel nicht zu weit oder mit zu großer Kraft auf die befüllte Verpackung gedrückt wird.

Darüber hinaus wird eine Vorrichtung bevorzugt, bei der die Steuereinheit mit einem Verstellorgan zum Einstellen der Bremskraft der Darmbremse verbunden ist. Eine solche Vorrichtung ermöglicht es, die vorbeschriebene Regelung der Prallheit mittels Regelung der Bremskraft durchzuführen.

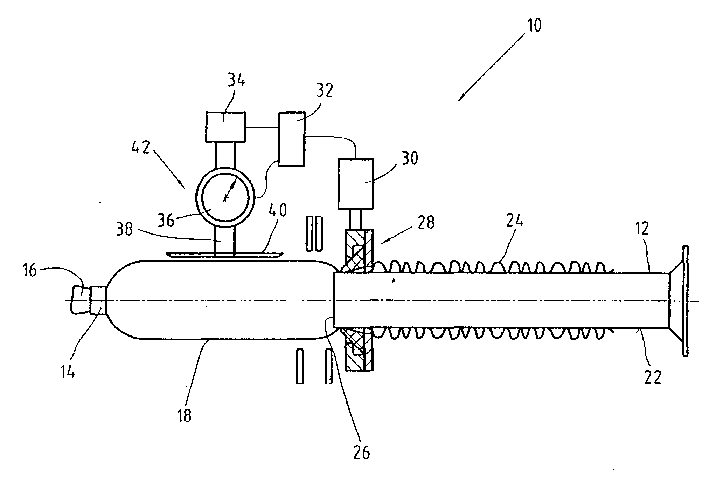

Die Erfindung soll nun anhand eines Ausführungsbeispiels mit Hilfe der Zeichnung näher erläutert werden.

Die Zeichnung zeigt in schematischer Seitenansicht eine Füllvorrichtung mit einer Darmbremse und einer Abtasteinrichtung für die Prallheit der Wurst.

Die Füllvorrichtung 10 besitzt ein Füllrohr 1 2, auf das eine mit einem Verschluß 14 an einem vorderen Ende 16 verschlossene Verpackungshülle 18 so aufgezogen ist, daß ein Teil der Verpackungshülle auf der Mantelfläche 22 des Füllrohres 12 einen Vorrat 24 bildet und sich das vordere Ende 16 der Verpackungshülle 18 vor einer Auslaßöffnung 26 des Füllrohres 12 befindet. Nahe der Auslaßöffnung 26 umschließt eine Darmbremse 28 die Mantelfläche 22 des Füllrohres 12. Die Verpackungshülle 18 ist zwischen der Mantelfläche 22 und der Darmbremse 28 hindurchgeführt und wird von der Darmbremse 28 auf die Mantelfläche 22 gedrückt. Die Darmbremse 28 ist mit einem Verstellorgan 30 verbunden, mit dem sich die Kraft einstellen läßt, mit der die Verpackungshülle 18 von der Darmbremse 28 auf die Mantelfläche 22 des Füllrohres 12 gedrückt wird.

Zum Herstellen einer Wurst wird Füllgut durch das Füllrohr 12 in die einseitig verschlossene Verpackungshülle 18 gepreßt. Infolge des Fülldrucks wird dabei weiteres Verpackungshüllenmaterial aus dem Vorrat 24 abgezogen. Bei diesem Abziehen wird die Verpackungshülle 18 von der Darmbremse 28 durch Reibung gebremst. Die Bremskraft der Darmbremse 28 wirkt dem Abziehen der Verpakkungshülle aus dem Vorrat 24 entgegen und muß von dem Fülldruck überwunden werden. Dadurch stellt sich ein von der Bremskraft der Darmbremse 28 abhängiger Innendruck in der Verpackungshülle 18 ein, durch den die Verpackungshülle 18 straff und prall wird. Die Prallheit hängt mithin von der Bremskraft der Darmbremse 28 ab und läßt sich durch Verändern der Bremskraft einstellen. Hierzu ist das Verstellorgan 30 vorgesehen.

Sobald ein Abschnitt der Verpackungshülle 18 mit einer gewünschten Menge Füllgut befüllt ist, wird der Verpackungshüllenabschnitt an seinem zweiten Ende verschlossen. Dazu wird die Verpackungshülle 18 vor der Auslaßöffnung 26 eingeschnürt, so daß ein füllgutfreier Zopf entsteht, der mit zwei nebeneinanderliegenden Verschlußklammern verschlossen werden kann. Anschließend wird der Zopf zwischen den beiden Verschlußklammern durchgetrennt. Einer der beiden Verschlüsse hält dann das zweite Ende des fertig befüllten Verpackungshüllenabschnitts verschlossen, während der andere Verschluß einen neuen Verschluß 14 bildet, der die noch zu befüliende Verpackungshülle 18 an ihrem vorderen Ende 16 geschlossen hält, so daß ein neuer Füllvorgang beginnen kann.

Über die bisher beschriebenen Merkmale hinaus weist die Füllvorrichtung 10 eine Steuereinheit 32 auf, an die einerseits das Verstellorgan 30 angeschlossen ist sowie andererseits eine Hubeinrichtung 34 und ein Meßwertaufnehmer 36. Sowohl die Hubeinrichtung 34 als auch der Meßwertaufnehmer 36 sind mit einem Stempel 38 verbunden, der an seinem vorderen Ende eine Tastfläche 40 aufweist. Der Stempel 38, dessen Tastfläche 40 und der Meßwertaufnehmer 36 bilden zusammen einen Sensor 42, mit dem sich die Prallheit der Verpackungshülle 18 erfassen läßt.

Zum Erfassen der Prallheit wird der Stempel 38 mit seiner Tastfläche 40 von der Hubeinrichtung 34 auf die befüllte Verpackungshülle 18 gedrückt. Dabei werden sowohl der vom Stempel 38 zurückgelegte Weg als auch die zum Bewegen des Stempels erforderliche Kraft erfaßt und an die Steuereinheit 32 weitergeleitet. Der Durchmesser der Verpackungshülle läßt sich ermitteln, indem ausgewertet wird, wie weit der Stempel 38 bewegt wurde, bis die zu seinem Bewegen erforderliche Kraft anstieg. Der Kraftanstieg hängt nämlich damit zusammen, daß die Tastfläche 40 die Verpackungshülle 18 erreicht hat, so daß zum weiteren Bewegen des Stempels eine erhöhte Kraft zur Verformung der Verpackung erforderlich ist. Wie hoch diese zur Verformung der Verpackungshülle 18 erforderliche Kraft ist, hängt von der Spannung der Verpackungshülle und von dem in ihr herrschenden Innendruck ab, also von der Prallheit der Verpackung.

In der Steuereinheit 32 werden die Meßwerte ausgewertet, indem sie beispielsweise mit vorher gespeicherten Meßwerten für wunschgemäße Verpackungen verglichen werden. Ergibt die Auswertung, daß die Verpackung zu prall ist, veranlaßt die Steuereinheit 32 das Verstellorgan 30 dazu, die Darmbremse 28 zu lockern, so daß sich eine geringere Bremskraft ergibt. Umgekehrt löst die Steuereinheit 32 eine Erhöhung der Bremskraft aus, sobald die Meßwerte ergeben, daß die Packung weniger prall als gewünscht ist.

Stark abweichende Meßwerte deuten auf größere Produktionsfehler hin, beispielsweise darauf, daß die Verpackungshülle geplatzt ist. In solchen Fällen kann die gesamte Füllvorrichtung von der Steuereinheit 32 abgeschaltet werden.

Das Überwachen und Regulieren der Prallheit ist auch dann möglich, wenn die Verpackungshülle 18 zum Verschließen eingeschnürt wird. Die beschriebene Vorrichtung erlaubt also eine durchgehende Kontrolle und Regelung der Prallheit wurstartiger Verpackungen und erlaubt es damit, die Herstellung wurstartiger Produkte weiter zu automatisieren und gleichzeitig die Produktion von Ausschuß zu vermindern.

## Patentansprüche

1. Verfahren zum Herstellen wurstartiger Produkte, bei dem Füllgut zum Befüllen einer schlauch- oder beutelförmigen Verpackungshülle in die einseitig verschlossene Verpackungshülle gepreßt und das Verpackungshüllenmaterial durch den Fülldruck von einem Vorrat abgezogen und dabei von einer Darmbremse abgebremst wird und die Verpackungshülle nach dem Befüllen auf das gewünschte Maß an einem zweiten Ende verschlossen wird,
**dadurch gekennzeichnet**, daß die Prallheit der Verpackungshülle (18) sowohl während des Befüllens als auch während des Verschließens mittels eines Sensors (42) erfaßt wird und das Befüllen oder das Verschließen sowohl bei Überschreiten eines oberen als auch bei Unterschreiten eines unteren Grenzwertes für die Prallheit unterbrochen wird.

2. Verfahren nach Anspruch 1, **dadurch gekennzeichnet,** daß die Bremskraft der Darmbremse (28) in Abhängigkeit von der ermittelten Prallheit reguliert wird.

3. Verfahren nach Anspruch 2, **dadurch gekennzeichnet,** daß die Bremskraft der Darmbremse (28) bei größerer als gewünschter Prallheit der Verpackungshülle (18) verringert und bei kleinerer Prallheit vergrößert wird.

4. Verfahren nach einem der Ansprüche 1 bis 3, **dadurch gekennzeichnet,** daß die Prallheit kontinuierlich erfaßt wird.

5. Verfahren nach einem der Ansprüche 1 bis 3, **dadurch gekennzeichnet,** daß die Prallheit in regelmäßigen Zeitabständen erfaßt wird.

6. Verfahren nach einem der Ansprüche 1 bis 5, **dadurch gekennzeichnet,** daß in kenntnis des Elastizität und des Neundurchmessers der Verpackungshülle die Prallheit durch Abtasten des Außendurchmessers der Verpackungshülle (18) erfaßt wird.

7. Verfahren nach einem der Ansprüche 1 bis 6, **dadurch gakennzeichnet,** daß zur Ermittlung der Prallheit die zur Verformung der gefüllten Verpackungsnülle (18) erforderliche Kraft erfaßt wird.

8. Verfahren nach einem der Ansprüche 1 bis 7, **dadurch gekennzeichnet,** daß zur Ermittlung der Pfallheit ein Stempel auf die befüllta Verpackungshülle gedrückt wird und dabei der vom Stempel zurückgelegte Weg oder die zum Bewegen des Stempels erforderliche Kraft oder beides aufgenommen wird.

9. Verfahren nach einem der Ansorüche 1 bis 8, **dadurch gekennzeichnet,** daß die zur Ermittlung der Prallheit aufgenommenen Meßwerte mit gespeicherten Maßwerten verglichen werden.

10. Vorrichtung zum Herstellen wurstartiger Produkte mit beidseitig verschlossener schlauch- oder beutelförmiger Verpackungshülle,
**gekennzeichnet** durch einen Sensor (42) zum Ermitteln der Prallheit der Verpakkungshülle (18) sowohl während des Befüllens als auch während des Verschließens, sowie durch eine Steuereinheit (32), welche mit dem Sensor (42) verbunden ist und welche von dem Sensor (42) ermitteite Meßwerte mit gespeicherten Maßwerten vergleicht und die die Vorrichtung abschaltet, falls die Meßwerte einen oberen Grenzwert für die Prallheit überschreiten oder einen unterer Grenzwert unterschreiten.

11. Vorrichtung nach Anspruch 10, mit einer regulierbaren Darmbremse (28),
**dadurch gekennzeichnet,** daß die Vorrichtung (10) mindestens eine Wirkverbindung vom Sensor (42) zur Darmbremse (28) aufweist.

12. Vorrichtung nach einem der Ansprüche 10 oder 11,
**dadurch gekennzeichnet,** daß der Sensor (42) einen Stempel (38) aufweist, welcher mit einer Tastifäche (40) auf die Außenseite der befüllten Verpackungshülle (18) preßbar ist.

13. Vorrichtung nach Anspruch 12,
**dadurch gekennzeichnet,** daß die Vorrichtung eine Hubeinrichtung (34) zum Bewegen des Stempels (38) aufweist.

14. Vorrichtung nach einem der Ansprüche 10 bis 13,
**dadurch gekennzeichnet,** daß der Sensor (42) einen Meßwertaufnehmer (36) für den Verstellweg des Stempels (38) oder die zur Bewegung des Stempels (38) erforderliche Kraft oder für beides aufweist.

15. Vorrichtung nach Anspruch 13 oder 14,
**dadurch gekennzeichnet,** daß die Steuereinheit mit dem Meßwertaufnehmer (36) oder der Hubeinrichtung (34) oder beiden verbunden ist.

16. Vorrichtung nach Anspruch 15,
**dadurch gekennzeichnet,** daß die Steuereinheit (32) mit einem Verstellorgan (30) zum Einstellen der Bremskraft der Darmbremse (28) verbunden ist.

## Claims

1. A method of producing sausage-like products, in which for filling a tubular or bag-shaped packaging casing filling material is pressed into the packaging casing closed at one end, and the packaging casing material is withdrawn from a reservoir due to the filling pressure and thereby retarded by a casing brake, and upon filling to the desired extent the packaging casing is closed at a second end,
**characterized in** that the tautness of the packaging casing (18) both during filling and during closure is detected by means of a sensor (42), and the filling or closing operation is interrupted both when the tautness exceeds an upper limit value and when the tautness falls below a lower limit value.

2. The method as claimed in claim 1, **characterized in** that the braking force of the casing brake (28) is regulated in dependence on the detected tautness.

3. The method as claimed in claim 2, **characterized in** that the braking force of the casing brake (28) is reduced when the tautness of the packaging casing (18) is larger than desired, and is increased when the tautness is smaller.

4. The method as claimed in any of claims 1 to 3,
**characterized in** that the tautness is detected continuously.

5. The method as claimed in any of claims 1 to 3,
**characterized in** that the tautness is detected in regular intervals.

6. The method as claimed in any of claims 1 to 5,
**characterized in** that with a knowledge of the elasticity and the nominal diameter of the packaging casing the tautness is detected by scanning the outside diameter of the packaging casing (18).

7. The method as claimed in any of claims 1 to 6,
**characterized in** that for determining the tautness the force required for deforming the filled packaging casing (18) is detected.

8. The method as claimed in any of claims 1 to 7,
**characterized in** that for determining the tautness a stamp is pressed onto the filled packaging casing, and the distance covered by the stamp or the force required for moving the stamp or both is recorded.

9. The method as claimed in any of claims 1 to 8,
**characterized in** that the measured values recorded for determining the tautness are compared with stored values.

10. An apparatus for producing sausage-like products with a tubular or bag-shaped packaging casing closed at both ends,
**characterized by** a sensor (42) for determining the tautness of the packaging casing (18) both during filling and during closure, and by a control unit (32) which is connected with the sensor (42), and which compares measured values determined by the sensor with stored values and switches off the apparatus if the measured values exceed an upper limit value for the tautness or fall below a lower limit value.

11. The apparatus as claimed in claim 10, comprising an adjustable casing brake (28), **characterized in** that the apparatus (10) has at least one operative connection from the sensor (42) to the casing brake (28).

12. The apparatus as claimed in any of claims 10 or 11,
**characterized in** that the sensor (42) has a stamp (38), which with a scanning surface (40) can be pressed onto the outside of the filled packaging casing (18).

13. The apparatus as claimed in claim 12,
**characterized in** that the apparatus has a lifting means (34) for moving the stamp (38).

14. The apparatus as claimed in any of claims 10 to 13,
**characterized in** that the sensor (42) has a transducer (36) for the adjusting path of the stamp (38) or the force required for moving the stamp (38) or for both.

15. The apparatus as claimed in claim 13 or 14, **characterized in** that the control unit is connected with the transducer (36) or the lifting means (34) or both.

16. The apparatus as claimed in claim 15,
**characterized in** that the control unit (32) is connected with an adjusting member (30) for adjusting the braking force of the casing brake (28).

## Revendications

1. Procédé pour fabriquer des produits du type saucisse, suivant lequel, afin de remplir une gaine d'emballage en forme de tube ou de sac, du produit à remplir est comprimé dans la gaine d'emballage fermée d'un côté et le matériau de la gaine d'emballage est tiré d'une réserve par la pression de remplissage en étant alors freiné par un frein de boyau, et la gaine d'emballage est, une fois remplie dans la mesure souhaitée, fermée à une deuxième extrémité,
**caractérisé** en ce qu'on détecte au moyen d'un détecteur (42) la tension de la gaine (18) d'emballage tant pendant le remplissage que pendant la fermeture, et on interrompt la fermeture ou le remplissage tant si l'on passe au dessus d'une valeur limite supérieure qu'en dessous d'une valeur limite inférieure de la tension.

2. Procédé suivant la revendication 1, **caractérisé** en ce qu'on règle en fonction de la tension déterminée la force de freinage du frein (28) de boyau.

3. Procédé suivant la revendication 2, **caractérisé** en ce qu'on réduit la force de freinage du frein (28) de boyau si la tension de la gaine (18) d'emballage est supérieure à la valeur souhaitée, et on augmente la force de freinage si la tension est inférieure.

4. Procédé suivant l'une des revendications 1 à 3, **caractérisé** en ce qu'on détecte la tension en continu.

5. Procédé suivant l'une des revendications 1 à 3, **caractérisé** en ce qu'on détecte la tension à intervalles de temps réguliers.

6. Procédé suivant l'une des revendications 1 à 5, **caractérisé** en ce qu'on détecte la tension en palpant le diamètre extérieur de la gaine (18) d'emballage.

7. Procédé suivant l'une des revendications 1 à 6, **caractérisé** en ce que, pour déterminer la tension, on détecte la force nécessaire pour déformer la gaine (18) d'emballage remplie.

8. Procédé suivant l'une des revendications 1 à 7, **caractérisé** en ce que, pour déterminer la tension, on presse un poinçon sur la gaine d'emballage remplie et on enregistre alors la course accomplie par le poinçon ou la force nécessaire pour déplacer le poinçon, ou les deux.

9. Procédé suivant l'une des revendications 1 à 8, **caractérisé** en ce que les valeurs de mesure enregistrées pour détecter la tension sont comparées à des valeurs de mesure mémorisées.

10. Dispositif pour fabriquer des produits du type saucisse comportant une gaine d'emballage en forme de tube ou de sac, fermée des deux côtés,
**caractérisé** par un détecteur (42) pour déterminer la tension de la gaine (18) d'emballage tant pendant le remplissage que pendant la fermeture, ainsi que par une unité (32) de commande, qui est reliée au détecteur (42) et qui compare les valeurs de mesure déterminées par le détecteur (42) à des valeurs de mesure mémorisées et arrête le dispositif si les valeurs de mesure dépassent une valeur limite supérieure pour la tension ou sont inférieures à une valeur limite inférieure.

11. Dispositif suivant la revendication 10, comportant un frein (28) de boyau réglable, **caractérisé** en ce que le dispositif (10) comporte au moins une liaison fonctionnelle du détecteur (42) au frein (28) de boyau.

12. Dispositif suivant la revendication 10 ou 11, **caractérisé** en ce que le détecteur (42) comporte un poinçon (38), qui peut être pressé par une face (40) de palpation sur la face extérieure de la gaine (18) d'emballage remplie.

13. Dispositif suivant la revendication 12, **caractérisé** en ce que le dispositif comporte un appareil (34) de levage pour déplacer le poinçon (38).

14. Dispositif suivant l'une des revendications 10 à 13,
**caractérisé** en ce que le détecteur (42) comporte un transducteur (36) pour la course de déplacement du poinçon (38) ou pour la force nécessaire pour déplacer le poinçon (38), ou pour les deux.

15. Dispositif suivant la revendication 13 ou 14, **caractérisé** en ce que l'unité de commande est reliée au transducteur (36) ou à l'appareil (34) de levage, ou aux deux.

16. Dispositif suivant la revendication 15, **caractérisé** en ce que l'unité (32) de commande est reliée à un organe (30) de réglage pour régler la force de freinage du frein (28) de boyau.
